# EUROPEAN PATENT APPLICATION

(11) **EP 1 444 899 A1**
(43) Date of publication of application: **11.08.2004**
(21) Application number: 03002758.5
(22) Date of filing: 06.02.2003
(51) Int. Cl.: A23B 4/16, A23B 4/28, A23B 4/044, A23L 3/3409, A22C 9/00

(54) **Gas injection into meat and apparatus for use therein**

(71) Applicant: CFS Bakel B.V., 5761 EN Bakel (NL)
(72) Inventor: Boogers, George Lambertus Josephus Maria, 5406 AR Uden (NL); Peters-Santegoets, Antonia Johanna Maria, 5411 GZ Zeeland (NL)
(74) Representative: Wolff, Felix, Dr.

(57) **Abstract**

The present invention deals with a process for treating meat, whereas a gas and/or a liquid that evaporates in the meat is injected into the meat. Furthermore the present invention deals with an apparatus with means to inject gas and/or liquid into meat.

## Description

The present invention deals with a process for treating meat such as poultry, game, fish, pork, beef and meat, whereas a gas and/or smoke and/or a liquid that evaporates in the meat is injected into the meat. Furthermore the present invention deals with an apparatus with means to inject gas and/or smoke and/or liquid into meat.

Nowadays, meat must look appealing for a very long period of time. Beef and tuna fish for example can be coloured red with substances like oxygen and/or Carbon monoxide. However, if the beef or the tuna fish are exposed to these gases, only the surface is coloured in a reasonable period of time.

It is therefore the objective of the present invention to achieve essentially the same colour throughout an entire piece of meat in an expectable timeframe, without changing the structure of the meat.

The objective is achieved with a process for treating food, especially poultry, game, fish, pork, beef and meat, whereas a gas and/or smoke and/or a liquid that evaporates in the meat is injected into the meat.

It is totally surprising for a person skilled in the art, that with the inventive process it is possible to colour or maintain the colour of an entire piece of meat regardless of its size in a reasonable period of time and without changing its structure and/or its size. With the inventive process it is also possible to smoke, preserve and/or flavour a piece of meat. The process can be carried out easily and cost effectively.

According to the present invention a gas and/or smoke and/or a liquid that evaporates in the food, is injected into the food. Any gas known to a person skilled in the art can be used to carry out the inventive process, whereas Nitrogen (N₂), Oxygen (O₂), Carbon monoxide (CO), Carbon dioxide (CO₂) and/or smoke are preferred substances. Preferred is also a mixture of at least two of those substances. The liquid that can be used within the inventive process is any liquid known to a person skilled in the art for the treatment of food that evaporates in the food, preferably the meat, at ambient temperature and ambient pressure, whereas the above mentioned substances or their mixture in their liquid form are preferred. This embodiment of the present invention has the advantage that the food is additionally cooled during the evaporation and that this process can be carried out with machine components known from the marinating of meat.

The gas and/or the liquid can be injected into the meat by any process and by any means known to a person skilled in the art, whereas needles and/or nozzles are preferred. Preferably the gas or the liquid is injected at different heights in the meat in order to treat the meat homogeneously. This is most effectively achieved with needles that are closed at the tip and have holes in the sidewalls, or are opened at the tip.

Preferably, the gas is injected at many locations in the meat simultaneously, preferably with an array of needles which have a preferred distance between two needles of 5 - 50 mm.

In a preferred embodiment of the present invention, the needles are inserted into the meat, the gas and/or smoke and/or the liquid is pressed into the meat and the needles are withdrawn. Preferably the pressure of injection is 0,5 - 5 Bar for the gas and/or smoke and 0,5 - 10 Bar for the liquid.

The amount of gas and/or liquid injected into the food, preferably meat, depends upon the application. However, an amount of 10 -150 ml of gas and 10 - 150 ml of liquid per 100 g of meat are a preferred amounts utilized in the inventive process.

The inventive process is applicable for any kind of food. Preferably the food is bone-in or boneless meat, even more preferably the meat is fish, pork, beef, lamb, game and/or poultry. The food, especially the meat can have any structure, whereas entire pieces of any size are preferred, so that especially valuable pieces of meat need not be reduced to smaller pieces in order to treat them according to the inventive process.

The inventive process can be used for any type of treatment of food with gas and/or liquids that evaporate in the food. Exemplary, the colouring of meat, smoking of meat and the preservation of meat are named.

The inventive process can be carried out in any apparatus suitable. In some cases apparatuses for the injection of liquid substances like marinade can be used with preferably some small modifications.

Another subject matter of the present invention is an apparatus to inject gas and/or liquid into meat. The inventive apparatus comprises means to inject gas and/or liquid that evaporates in the meat into the meat and means to remove the off gas from the apparatus.

The inventive apparatus is simple to construct and to operate. The injection of gas and/or liquid that evaporates in the meat can be carried out very well. Gas that is not absorbed by the food is removed as off gas.

This removal of the off gas can be carried out in many different ways. Preferably the apparatus comprises a hood that covers the means to inject gas and/or liquid into meat and the treated meat, whereas the interior of the hood has a lower pressure than the exterior of the hood. With this embodiment of the present invention it is avoided that off gas is attained to the atmosphere without prior treatment.

In another preferred embodiment of the present invention, the gas and/or the liquid is only injected into the meat when the injection means are in contact with the meat. Thus, it is assured that as little as possible off gas is produced.

The gas and/or the liquid can be injected in many different ways, whereas needles, preferably closed at the tip and with holes at different heights in the sidewall or open at the tip are preferred. The needles are preferably shiftable in all directions, more preferably vertically shiftable, in order to be insertable into the meat for injection and removable out of the meat after injection.

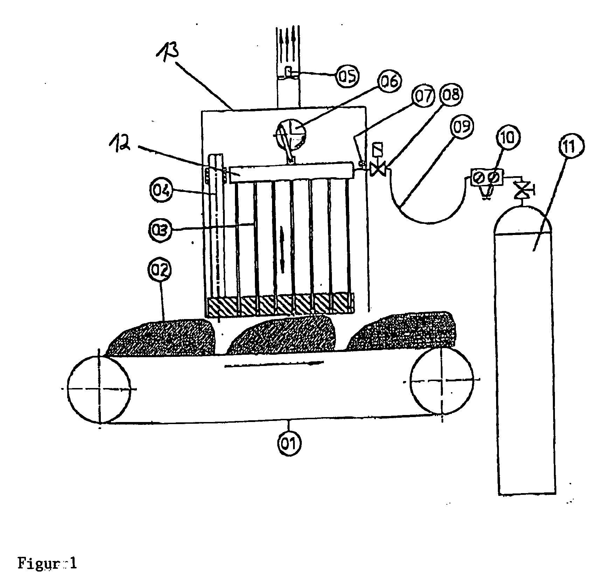

Subsequently, the present invention is explained by means of Figure 1. These explanations are only exemplary and do not limit the scope of the present invention. The explanations are applicable to the inventive process as well as to the inventive apparatus.

Figure 1 shows the inventive apparatus. The apparatus comprises a belt 1 that transports the product 2 to be treated according to the inventive process into the inventive apparatus. The belt operates stepwise; i.e. the product 2 is transported into the apparatus, stops until the gas injection has taken place and subsequently advances again, until the next charge to be treated is in the inventive apparatus. As soon as the product is in the apparatus, the needles 3 are moved downwards into the meat by means of a main drive 6. After the needles 3 are in touch with the product a valve 8 is opened and gas and/or liquid that evaporates in the product 2 flows out of the tank 11 through the pressure regulator 10 and a hose 9 into the distribution block 12 and from there through the needles 3 into the product, which is in the present example fish. However, the person skilled in the art understands that the product can be food of any type. After the gasinjection is completed, the valve 8 is closed and the needles 3 are withdrawn from the product. However, it is also possible to maintain the gasflow until the needles are withdrawn from the product and then close valve 8. A stripperbar 4 removes the fish from the needles if needed and the transport belt 1 advances the product.

The person skilled in the art understands that the distribution block 12 can be several units that can be operated separately from each other; i.e. they can be moved up and down independently from each other and the gasflow can be regulated individually. This embodiment of the present invention allows the treatment of products that do not have a more or less uniform thickness.

At least the section in which the gas injection takes place is covered with a hood 13 that comprises an extractor, a ventilator, at the top that sucks gas out of the hood so that there is a slight negative pressure inside the hood in order to avoid that the gas injected or evaporated gets in the atmosphere without treatment.

### List of reference numbers

- 01: Transport bell
- 02: Product
- 03: Needle
- 04: Stripperbar
- 05: Extractor
- 06: Main drive
- 07: Pressure switch
- 08: Selenoide volve
- 09: Hose
- 10: Pressure regulator
- 11: Gas tank

## Claims

1. Process for treating food, especially meat like poultry, game, fish, pork, beef and meat **characterized in, that** a gas and/or smoke and/or a liquid that evaporates in the food is injected into the food.

2. Process according to claim 1, **characterized in that** the gas or the liquid is injected with needles and/or preferably high pressure nozzles.

3. Process according to claim 2, **characterized in, that** the needles are inserted into the meat, the gas and/or the liquid is pressed into the meat and the needles are withdrawn.

4. Process according to one of the preceding claims, **characterized in, that** the gas or the liquid is CO, CO₂, N₂, O₂, smoke or a mixture thereof.

5. Process according to one of the preceding claims, **characterized in, that** distance between two needles is 5 - 50 mm.

6. Process according to one of the preceding claims, **characterized in, that** gas or the liquid is injected at different heights of the meat.

7. Process according to one of the preceding claims, **characterized in, that** the pressure of injection is 0,5 - 5 Bar for the gas and 0,5 - 10 Bar for the liquid.

8. Process according to one of the preceding claims, **characterized in, that** 10 - 150 ml gas are injected per 100 g of meat.

9. Process according to one of the preceding claims, **characterized in, that** the meat is fish, pork, beef, game, lamb and/or poultry each with or without bones.

10. Process according to one of the preceding claims, **characterized in, that** by injecting the gas and/or smoke or the liquid, the colour of the meat is improved, the meat is smoked and/or the meat is preserved.

11. Apparatus to inject gas and/or liquid into meat with means to inject gas and/or liquid that evaporates in the meat into the meat, which comprises means to remove the off gas from the apparatus.

12. Apparatus according to claim 11, **characterized in, that** it comprises a hood that is under negative pressure.

13. Apparatus according to one of claims 11 or 12, **characterized in, that** the gas and/or the liquid is only injected into the meat when the means are in contact with the meat.

14. Apparatus according to one of the claims 11 - 13, **characterized in, that** the means to inject gas and/or liquid are needles and/or preferably high pressure nozzles.

15. Apparatus according to claim 14, **characterized that** the needles have holes in the sidewall, or at the tip.
